# EUROPÄISCHE PATENTANMELDUNG

(11) **EP 4 561 119 A1**
(43) Veröffentlichungstag der Anmeldung: **28.05.2025**
(21) Anmeldenummer: 24214614.0
(22) Anmeldetag: 21.11.2024
(51) Int. Cl.: H04W 4/02, H04W 4/90, H04W 76/50

(54) **MANAGEMENT EINER ERSTHILFE IN NOTSITUATIONEN**

(30) Priorität: 22.11.2023 DE 102023132534
(71) Anmelder: Deutsche Telekom AG, 53113 Bonn (DE)
(72) Erfinder: BRNJAK, Wolfgang, 53881 Euskirchen (DE); BUBLITZ, Volker, 14612 Falkensee (DE)
(74) Vertreter: Nern, Peter-Michael

(57) **Zusammenfassung**

Die Erfindung betrifft eine Lösung für das Management einer Ersthilfe in Notsituationen, welche es Nutzern eines entsprechenden Systems ermöglicht, mittels eines Endgerätes und einer von diesem verarbeiteten Programmanwendung, an mindestens einem definierten Systemstandort Hilfe durch eine als Ersthelfer fungierende Person anzufordern. Angaben zu mindestens einem solchen Systemstandort sowie zu mindestens einem Ersthelfer werden bei einer zentralen Instanz des Systems registriert. Die Weiterleitung von Hilfeanforderungen an als Ersthelfer bei dem System registrierte Personen erfolgt entsprechend einem auf einen jeweiligen Systemstandort bezogenen Check-In/Check-Out-Mechanismus. Ein sich ausschließlich auf einen Systemstandort beziehender Check-In oder Check-Out eines registrierten Ersthelfers, welcher nicht an die Übermittlung diesen Ersthelfer betreffender Positionsangaben gebunden ist, erfolgt mittels eines vom Ersthelfer genutzten Endgeräts. Dazu wird durch eine von diesem Endgerät verarbeitete Programmanwendung an die zentrale Instanz eine in dem System zu einer temporären Verknüpfung des Ersthelfers mit dem Systemstandort führende Check-In-Nachricht oder eine zur Aufhebung einer solchen bereits bestehenden Verknüpfung führende Check-Out-Nachricht übermittelt.

## Beschreibung

Die Erfindung betrifft eine Lösung für das Management einer Ersthilfe in Notsituationen. Sie bezieht sich auf ein Verfahren, welches es Nutzern ermöglicht, an definierten Standorten - zum Beispiel Standorten eines Unternehmens, eines Vereins oder einer sonstigen Organisation - beim Eintritt einer Notsituation Hilfe durch eine sich ebenfalls an dem jeweiligen Standort befindende, als Ersthelfer agierende Person anzufordern. Neben diesem Verfahren ist Gegenstand der Erfindung ein zu dessen Ausführung geeignetes System.

Ein bevorzugter Einsatzfall der Erfindung ist dabei das Management für die Ersthilfe in einer medizinischen Notsituation, ohne dass jedoch die nachfolgend beschriebene und beanspruchte Lösung hierauf beschränkt wäre. Die beschriebene Lösung ist vielmehr auch in anderen Notsituationen, wie beispielsweise für das Management einer Brandalarmierung, anwendbar. Ungeachtet dieses und anderer möglicher Einsatzfälle soll jedoch die Erfindung nachfolgend im Wesentlichen anhand des eingangs genannten bevorzugten Einsatzzwecks beschrieben werden.

Bei medizinischen Notfällen, so auch bei solchen, wie sie als Folge von Arbeitsunfällen auftreten, ist es sehr wichtig, einer sich in einer entsprechenden Notsituation befindenden Person schnelle Hilfe zu leisten. In den letzten Jahren hat sich die Zahl der registrierten Arbeitsunfälle erfreulicherweise stark verringert. Dies ist einerseits zurückzuführen auf die Gründung von Arbeitsschutzorganisationen, beispielsweise von Berufsgenossenschaften oder Unfallversicherungsträgern, wie der Deutschen Gesetzlichen Unfallversicherung e.V. (DGUV), die durch ihr Hinwirken auf entsprechende Gesetze und Vorschriften dazu beigetragen haben, die Arbeitssicherheit zu fördern und das Bewusstsein für Unfallprävention zu stärken. So besteht etwa die rechtliche Verpflichtung, die Zahl der in einem Arbeitsumfeld verfügbaren Ersthelfer und Ersthelferinnen (im Weiteren Ersthelfer) zu erfassen. Darüber hinaus haben Arbeitgeber die Verantwortung sicherzustellen, dass unmittelbar nach einem Unfall erste Hilfe geleistet und eine erforderliche ärztliche Versorgung veranlasst wird. Ferner ist die Ausbildung von Mitarbeitern in Arbeitssicherheit und für das Leisten erster Hilfe ein wichtiger Faktor bei der Vermeidung von Unfällen und für eine schnelle Reaktion im Ernstfall.

Aufgrund der sich ständig verändernden Arbeitswelt haben sich Unternehmens- und Behördenstrukturen allerdings verändert und neue Arbeitsweisen entwickelt. Dies gilt ebenso mit Blick auf sich unter dem Stichwort Arbeitswelt 4.0 vollziehende Veränderungen, als auch auf solche, welche durch andere Gründe bedingt sind und beispielsweise im Bürosektor durch eine ohnehin zu verzeichnende Zunahme der Anteile von Homeoffice zu beobachten sind. Die Arbeitswelt ist insoweit agiler, flexibler und sowohl für Personen als auch für Teams unabhängiger von festen Standorten geworden. Hierbei sind beispielsweise Desk-Sharing und Mobile Working gängige Praktiken.

Im Zusammenhang mit derartigen Arbeitsszenarien kann die Anwesenheit der gesetzlich vorgegebenen Anzahl von Ersthelfern nicht immer sichergestellt werden. Es fehlen häufig ein Überblick über an einzelnen Arbeitsstandorten verfügbare Ersthelfer und Möglichkeiten für das Management ihres Einsatzes. Soweit diesbezüglich dennoch teilweise Lösungen im praktischen Einsatz sind, gehen diese im Hinblick auf die Feststellung der Anwesenheit eines oder mehrerer Ersthelfer an einem Standort beispielsweise von einem unmittelbaren, sich auf von entsprechenden Personen mitgeführte mobile Endgeräte beziehenden Standortvergleich unter Nutzung gebräuchlicher Positionsbestimmungssysteme aus. Das heißt, beispielsweise mittels GPS (also des Global Positioning Systems oder vergleichbarer satellitengestützter Systeme) werden fortwährend der aktuelle Aufenthaltsort eines Ersthelfers festgestellt und dessen Geokoordinaten darauf überprüft, ob es sich hierbei um einen Standort handelt, welcher bezüglich der Anwesenheit mindestens eines Ersthelfers zu überwachen ist respektive für welchen eine solche Anwesenheit möglichst sicherzustellen ist. Diese Vorgehensweise entspricht jedoch einem permanenten Tracking der Ersthelfer, welches auch dafür genutzt werden könnte, Bewegungsprofile dieser Personen zu erstellen. Dies ist jedoch seitens der betroffenen Personen, also der Ersthelfer, häufig eher unerwünscht, da diese sich beispielsweise in ihrer Privatsphäre eingeschränkt sehen.

Ein anderer praktizierter Ansatz ist der Einsatz von Telefonlisten vor Ort, in welche sich Ersthelfer und gegebenenfalls weitere Personen eintragen. Aber auch hierbei ist die Wahrung des Datenschutzes zumeist doch sehr schwierig, da letztlich aus derartigen Listen im Grunde für jeden ersichtlich ist, wer und zu welcher Zeit sowie gegebenenfalls wie lange an einem entsprechenden Standort war. Die betroffenen Personen, folglich auch die Ersthelfer, können dabei nicht sicher sein, dass die hieraus zu gewinnenden Informationen ausschließlich für den Zweck der Organisation einer eventuell erforderlichen Ersthilfe verwendet werden.

Aufgabe der Erfindung ist es daher, eine alternative Lösung bereitzustellen, welche die zuvor angesprochenen Nachteile und Probleme vermeidet. Die entsprechende Lösung soll ein effizientes Management eines gegebenenfalls erforderlich werdenden Einsatzes eines oder mehrerer Ersthelfer ermöglichen und hierbei gleichzeitig die Privatsphäre der sich als Ersthelfer zur Verfügung stellenden Personen wahren. Die Lösung soll es dabei außerdem Personen respektive Organisationen (Firmen, Vereinen, sonstigen Organisationen), welche für die Sicherstellung einer Ersthilfe in Notfällen verantwortlich sind, ermöglichen, jederzeit einen Überblick über die Anzahl der an einem Standort im Notfall verfügbaren Ersthelfer zu erhalten und erforderlichenfalls deren Einsatz zu koordinieren. Hierfür sind ein Verfahren anzugeben und ein zur Durchführung dieses Verfahrens geeignetes System bereitzustellen.

Die Aufgabe wird durch ein Verfahren mit den Merkmalen des Patentanspruchs 1 gelöst. Ein die Aufgabe lösendes System wird durch den unabhängigen Sachanspruch charakterisiert. Vorteilhafte Aus- und Weiterbildungen der Erfindung sind durch die jeweiligen Unteransprüche gegeben.

Das zur Lösung der Aufgabe vorgeschlagene Verfahren für das Management einer Ersthilfe in Notsituationen ermöglicht es den Nutzern eines dafür ausgebildeten Systems, an mindestens einem definierten, durch das System abgedeckten Standort (im Weiteren auch Systemstandort) mittels eines von ihnen verwendeten computerbasierten Endgeräts und einer von diesem Endgerät verarbeiteten Programmanwendung Hilfe durch eine als Ersthelfer fungierende Person anzufordern. Angaben, welche den vorgenannten mindestens einen Standort respektive jeden von gegebenenfalls mehreren Standorten eindeutig bezeichnen, also definieren, werden dazu bei einer zentralen Instanz (einer ebenfalls computerbasierten Einrichtung, wie beispielsweise einem Server) registriert. In dieser zentralen Instanz werden außerdem Angaben zu mindestens einer, vorzugsweise zu mehreren als Ersthelfer fungierenden Personen registriert.

Die zentrale Instanz des Systems steuert zudem die Weiterleitung einer unter Übermittlung den jeweiligen Systemstandort bezeichnender Angaben erfolgenden Hilfeanforderung eines sich an einem Systemstandort befindenden Nutzers an mindestens einen bei der zentralen Instanz registrierten, sich (zumindest vermeintlich) ebenfalls an diesem Systemstandort befindenden Ersthelfer. Für das Management der Ersthilfe an dem mindestens einen Systemstandort erfolgt die Weiterleitung von Hilfeanforderungen an als Ersthelfer bei dem System registrierte Personen entsprechend einem auf einen jeweiligen Systemstandort bezogenen Check-In/Check-Out-Mechanismus. Gemäß diesem wird eine an einem Systemstandort ausgesendete, bei der zentralen Instanz eingehende Hilfeanforderung nur an ein Endgerät mindestens eines bei diesem Standort eingecheckten Ersthelfers weitergeleitet.

Ein sich ausschließlich auf einen Systemstandort beziehender Check-In oder Check-Out eines bei dem System registrierten Ersthelfers, welcher nicht an die Übermittlung diesen Ersthelfer betreffender Positionsangaben gebunden ist, erfolgt dabei mittels eines von dem Ersthelfer genutzten Endgeräts. Dies geschieht, indem durch eine von diesem Endgerät verarbeitete Programmanwendung an die zentrale Instanz eine Check-In-Nachricht oder eine Check-Out-Nachricht übermittelt wird, ohne dass es hierfür, wie bereits ausgeführt, einer Übermittlung konkreter Positionsangaben zu dem betreffenden Ersthelfer an das System bedarf. Eine an das System ausgesendete Check-In-Nachricht bewirkt in diesem eine temporäre Verknüpfung des Ersthelfers mit dem Systemstandort, für welchen der Check-In erfolgt. Umgekehrt führt, im Falle eines bereits bestehenden Check-Ins bei einem Systemstandort, die Übermittlung einer Check-Out-Nachricht an das System zur Aufhebung der Verknüpfung zwischen diesem Systemstandort und dem Ersthelfer.

Demnach wird zwischen einem jeweiligen Ersthelfer und einem von ihm aufgesuchten Systemstandort mit Hilfe der durch ein Endgerät des Ersthelfers verarbeiteten Programmanwendung nur temporär eine logische Verknüpfung hergestellt, welche der zentralen Instanz des Systems im Bedarfsfall eine Weiterleitung einer entsprechenden Hilfeanforderung ermöglicht. Indes liegen bei der zentralen Instanz Informationen zum Aufenthaltsort eines Ersthelfers stets nur unter Bezug auf einen Systemstandort vor, nämlich unter Bezug auf den Systemstandort, bei welchem die betreffende, als Ersthelfer fungierende Person eingecheckt ist. Das heißt, dem System respektive dessen zentraler Instanz liegen den Aufenthaltsort eines Ersthelfers betreffende Angaben stets nur dann und so lange vor, wie der Ersthelfer bei einem Systemstandort, also bei einem zur Nutzung des Verfahrens durch das System abgedeckten Standort, eingecheckt ist.

Entsprechend der zuvor erläuterten grundsätzlichen Verfahrensgestaltung ist es zudem so, dass der zentralen Instanz keine Informationen dazu vorliegen, wo genau sich die betreffende Person respektive der Ersthelfer an einem jeweiligen, beispielsweise durch eine Adresse beschriebenen, aber jedenfalls einen größeren Bereich, beispielsweise durch einen definierten Radius um dedizierte Geokoordinaten herum, bezeichnete Standort aufhält. Ein gezieltes Tracking eines jeweiligen Ersthelfers ist demnach - jedenfalls ohne dessen ausdrückliche Genehmigung (hierzu später mehr) - nicht möglich, wobei aber dennoch dem System zumindest seine (vermeintliche) Anwesenheit an einem bestimmten Systemstandort bekannt ist.

Wie vorstehend ausgeführt, bedient sich ein Nutzer des Systems, welcher Hilfe benötigt, eines computerbasierten Endgeräts mit einer von diesem verarbeiteten Programmanwendung, um Hilfe anzufordern. Insoweit kann es sich hierbei insbesondere auch um ein mobiles Endgerät, wie beispielsweise um ein Smartphone, mit einer in Umsetzung des Verfahrens hierauf installierten und durch dieses ausgeführten Miniprogrammanwendung (App) handeln. Denkbar ist es in diesem Zusammenhang außerdem, dass es sich bei der besagten App (im Weiteren auch Notruf-App) um eine Programmanwendung handelt, für welche auch eine auf einem PC lauffähige Desktop-Version existiert und demgemäß ein diese Programmanwendung ausführender PC das für die Hilfeanforderung verwendete Endgerät ist.

Beim Absetzen eines Notrufs (Aussenden einer Hilfeanforderung) wird durch die Notfall-App an das System respektive an dessen zentrale Instanz ein Token mit einer Empfänger-ID ausgesendet. Im Kontext der hier beschriebenen und beanspruchten Erfindung handelt es sich bei dem Token um eine die Empfänger-ID umfassende Folge von Bytes oder um einen die Empfänger-ID enthaltenden Datensatz. Die Empfänger-ID enthält vorzugsweise eine Rückrufnummer (eines mobilen von dem Nutzer bei der Absendung des Notrufs verwendeten und somit die Notruf-App ausführenden Endgeräts), Angaben zur regelmäßigen (sich an einem Systemstandort befindenden) Arbeitsstätte des Nutzers und gegebenenfalls weitere Angaben. Es handelt sich hierbei um Angaben, welche bei dem Nutzer im Zusammenhang mit der Installation und dem Einrichten der Notfall-App auf seinem Endgerät gegebenenfalls automatisch ermittelt (wie beispielsweise die Rückrufnummer) und/oder erfragt sowie als Profildaten zum Nutzer in der App abgespeichert werden. Typischerweise müssen diese Angaben beim Absetzen eines Notrufs (einer Hilfeanforderung) nicht korrigiert werden. Oder aber, sie werden hinsichtlich des genauen augenblicklichen Standorts des Nutzers erforderlichenfalls auch automatisiert korrigiert, sofern der Nutzer beispielsweise ein mobiles Endgerät nutzt und die Verwendung von GPS freigegeben hat.

Auch im Zusammenhang mit dem standortbezogenen Check-In oder Check-Out eines Ersthelfers kommen ein von diesem Ersthelfer verwendetes Endgerät und eine von diesem verarbeitete Programmanwendung zum Einsatz. Bei dem entsprechenden Endgerät kann es sich ebenfalls um ein mit der besagten Programmanwendung ausgestattetes mobiles Endgerät oder auch um ein stationäres computerbasiertes Endgerät, wie beispielsweise einen PC, handeln. Im Hinblick auf die insoweit angesprochenen Endgeräte und die jeweils von ihnen verarbeitete Programmanwendung kommen dabei mit Bezug auf das Verfahren unterschiedliche Szenarien und mit Bezug auf das System unterschiedliche Konstellationen beziehungsweise Konfigurationen in Betracht.

Denkbar ist es zum Beispiel, dass einerseits eine das Verfahren hinsichtlich der Hilfeanforderung unterstützende Programmanwendung zum Einsatz kommt und andererseits eine davon unabhängige Programmanwendung für Ersthelfer, das heißt eine Programmanwendung zum Zweck des Check-Ins und Check-Outs sowie zur Unterstützung später noch angesprochener weiterer Ersthelfer betreffender Funktionalitäten. Dies ist auch der Grund dafür, dass der Begriff "Programmanwendung" in dem Patentanspruch 1 einmal im Kontext mit einem eine Hilfeanforderung aussendenden Nutzer des Systems sowie anderseits im Kontext zu dem mindestens einen Ersthelfer jeweils mit einem unbestimmten Artikel versehen ist. Vorzugsweise ist jedoch die Lösung so ausgestaltet, dass von den Nutzern des Systems zur bedarfsweisen Anforderung von Hilfe eine Programmanwendung verwendet wird, mittels derer sich auch Ersthelfer bei einem jeweiligen Systemstandort ein- oder auschecken.

Das hinsichtlich der Verwendung eines unbestimmten Artikels in den Patentansprüchen mit Bezug auf die Programmanwendung Gesagte, gilt auch für den Begriff "Endgerät" respektive "mobiles Endgerät in den unterschiedlichen Kontexten seiner im Zusammenhang mit einem Ersthelfer erfolgenden Nennung. Dies meint, das Endgerät, mittels welchem sich ein Ersthelfer in Bezug auf einen Systemstandort bei dem System eincheckt, muss nicht zwingend dasjenige sein, mit welchem er eventuelle Mitteilungen mit Hilfeanforderungen empfängt.

Vorzugsweise kommt demnach eine Programmanwendung zum Einsatz, welche in einem ersten Betriebsmodus, das heißt in einem Standardbetriebsmodus, die Anforderung von Hilfe an einem Systemstandort ermöglicht, und in einem zweiten Betriebsmodus, nämlich in einem Ersthelfermodus, Ersthelfern den standortbezogenen Check-In oder Check-Out ermöglicht. Hierbei ist außerdem der genannte Ersthelferbetriebsmodus vorzugsweise derart ausgestaltet, dass es auch Ersthelfern ermöglicht ist, für sich selbst in einer Notsituation Hilfe durch andere Ersthelfer anzufordern. Was die Betriebsmodi und deren Verfügbarkeit anbelangt, so kann die Lösung derart ausgestaltet sein, dass der Ersthelfermodus zum Zweck der erstmaligen Registrierung einer Person als Ersthelfer gesondert aktiviert werden muss und die Programmanwendung nach einer solchen Registrierung stets im Ersthelfermodus arbeitet, wohingegen sie in allen anderen Fällen, also insbesondere auf Endgeräten nicht als Ersthelfer registrierter Personen, ausschließlich im Standardmodus arbeitet.

Auch für die Art und Weise des Check-Ins und/oder Check-Outs von Ersthelfern an einem Systemstandort sind grundsätzlich unterschiedliche Möglichkeiten gegeben. So kann das Verfahren beispielsweise derart umgesetzt werden, dass Ersthelfer einen Check-In und/oder einen Check-Out am Systemstandort manuell mittels eines Bedienelements für die schon mehrfach angesprochenen Programmanwendung, also beispielsweise durch den Klick auf einen von einem Display des Endgeräts visualisierten Button, vornehmen müssen. Im Hinblick auf den Check-In birgt dieses jedoch die Gefahr, dass Ersthelfer den Check-In vergessen und der zentralen Instanz des Systems demzufolge ihre Anwesenheit an einem Systemstandort nicht bekannt ist.

Dem steht aus Sicht des Ersthelfers der Vorteil gegenüber, dass ein jeweiliger Ersthelfer selbst entscheiden kann, ob er oder sie beim Betreten eines Systemstandorts stets für den Empfang einer Hilfeanforderung zur Verfügung stehen will/kann oder nicht. Da allerdings, insbesondere in der Arbeitswelt, der Arbeits- und Gesundheitsschutz sowie die Möglichkeit, einer sich in Not befindenden respektive Hilfe anfordernden Person zu helfen oder einer anderen Notsituation (zum Beispiel Brand) entgegenwirken zu können, regelmäßig im Vordergrund stehen sollten, ist es zu bevorzugen, entsprechend einer insoweit favorisierten Verfahrensgestaltung zumindest einen automatisierten Check-In oder aber sowohl einen automatisierten Check-In als auch einen automatisierten Check-Out vorzusehen. Letzteres hat hierbei, wiederum aus der Sicht des Ersthelfers, den Vorteil, dass ein Ersthelfer nicht als solcher angesprochen wird, wenn er sich nicht an einem Systemstandort befindet und gegebenenfalls sogar weit entfernt davon ist, aber vergessen hat, standortbezogen auszuchecken.

Die jedenfalls auch von der Lösung umfasste Möglichkeit eines manuellen Check-In/Check-Out ist im Übrigen auch der Grund dafür, warum weiter oben davon gesprochen wurde, dass ein bei einem Systemstandort eingecheckter Ersthelfer sich "vermeintlich" an demselben Standort befindet respektive an diesem anwesend ist wie der Hilfe mittels der Notruf-App anfordernde Nutzer.

Ein automatisierter Check-In und/oder Check-Out kann wiederum auf unterschiedliche Weise realisiert werden. Soweit ein Ersthelfer hierfür regelmäßig eine stationäre computerbasierte Endeinrichtung, wie beispielsweise einen PC, verwendet, kann beispielsweise ein automatisierter Check-In mit dem Hochfahren und dem automatischen Starten der für das Verfahren zu verwendenden Programmanwendung erfolgen. Entsprechendes gilt für den Check-Out im Zusammenhang mit dem Herunterfahren eines entsprechenden PCs.

Entsprechend einer besonders bevorzugten Verfahrensgestaltung, welche von einer Nutzung mobiler Endgeräte durch Ersthelfer ausgeht, werden bei der zentralen Instanz des Systems für die bei ihr registrierten Systemstandorte neben Adressen und/oder Bezeichnungen oder alternativ dazu Positionskoordinaten eines Positionsbestimmungssystems, wie beispielsweise eines satellitengestützten Positionsbestimmungssystems (GPS oder dergleichen), hinterlegt. In jedem Falle werden die zu einem Systemstandort, beispielsweise in einer Datenbank der zentralen Instanz, zu dessen Bezeichnung gehaltenen Daten sich immer auf einen bestimmten Bereich, ein bestimmtes Areal, beziehen (siehe die weiter oben und nachfolgend dazu gegebenen Ausführungen).

Ein automatisierter Check-In oder Check-Out eines Ersthelfers bei einem jeweiligen Systemstandort wird mithilfe zu den Standorten im System gespeicherter Positionskoordinaten realisiert, indem an ein mobiles Endgerät eines Ersthelfers und an die von diesem bei der Wahrnehmung einer Ersthelferfunktion seines Nutzers verarbeitete Programmanwendung, im Zuge der Registrierung des Ersthelfers bei dem System und im Falle nachfolgender die Systemstandorte betreffender Aktualisierungen des Systems, die Positionskoordinaten zu den Systemstandorten übermittelt werden. Die von dem mobilen Endgerät des Ersthelfers ausgeführte Programmanwendung beauftragt daraufhin das von dem Endgerät verwendete Betriebssystem über eine Programmschnittstelle, den örtlichen Eintritt und das Verlassen einer Region um die zu einem der Systemstandort gehörenden Positionskoordinaten herum zu beobachten. Beim Auftreten eines dieser Ereignisse wird dann durch das Betriebssystem an die Programmanwendung (App) eine Information zurückzugeben, aufgrund welcher diese automatisiert die standortbezogene Check-In- oder Check-Out-Nachricht an die zentrale Instanz des Systems übermittelt. Auch hierbei werden aber für das Check-In oder Check-Out keine Positionskoordinaten des Ersthelfers respektive seines Endgeräts an das System übertragen. Vielmehr erfolgt der Standortvergleich rein lokal auf dem (mobilen) Endgerät des Ersthelfers. Ein Tracking der betreffenden Person wird hierdurch verhindert.

Soweit Positionskoordinaten respektive Geokoordinaten zu den Systemstandorten registriert werden, bezeichnen diese einen ganz konkreten Punkt auf der Erdoberfläche, wobei ein Systemstandort einen Bereich, beispielsweise in einem Radius von 500 m (die Festlegung der konkreten Größe des Radius ist eine Implementierungsfrage), um einen derartigen Punkt herum mit umfasst. Die Positionskoordinaten respektive Geokoordinaten können dabei für einen mittels eines mobilen Endgerätes eines Ersthelfers erfolgenden automatisierten Check-In oder für sowohl einen automatisierten Check-In als auch einen automatisierten Check-Out verwendet werden. Hierbei kann gemäß dem Verfahren auch die Möglichkeit vorgesehen sein, dass eng benachbarte Systemstandorte zu einer Standortgruppe zusammengefasst werden. Sofern sich dann ein Ersthelfer an einem Standort der Standortgruppe eincheckt, ist er dem System auch für den oder die anderen Standorte derselben Standortgruppe als ein sich in Bereitschaft für die Weiterleitung einer Hilfeanforderung zur Verfügung stehender Ersthelfer bekannt. Die vorstehend zu Positionskoordinaten und Standortgruppen getroffenen Aussagen gelten entsprechend aber auch für einen mittels eines PC automatisiert bei dessen hochfahren erfolgenden Check-In bei einem Standort oder einer Standortgruppe.

Benutzt der Ersthelfer im Rahmen des Verfahrens ein mobiles Endgerät, so führt die von dem mobilen Endgerät ausgeführte (und gegebenenfalls im Hintergrund laufende) Programmanwendung permanent einen Vergleich von auf dem Endgerät zu seiner jeweiligen Position zur Verfügung stehenden Positionskoordinaten mit durch die zentrale Einrichtung des Systems bei der Registrierung des Ersthelfers oder bei diesbezüglichen Systemänderungen an das Endgerät übermittelten Positionskoordinaten durch. Wird hierbei durch das Endgerät festgestellt, dass es sich an einem der Systemstandorte befindet, wird der Ersthelfer respektive dessen Endgerät standortbezogen durch entsprechende Meldung an die zentrale Instanz bei dem System eingecheckt. Umgekehrt erfolgt ein Check-Out sobald der Ersthelfer respektive sein Endgerät den betreffenden Systemstandort wieder verlässt.

Das Verfahren kann vorteilhafterweise weiterhin so ausgestaltet sein respektive implementiert werden, dass im Falle der Verwendung eines mobilen Endgeräts (gegebenenfalls auch neben der Verwendung eines PC oder eines vergleichbaren computerbasierten Endgeräts) und einer entsprechenden dazu durch einen Ersthelfer erteilten Freigabe durch die von seinem mobilen Endgerät verarbeitete Programmanwendung, vorzugsweise bei deren Start, ein Token an die zentrale Instanz des Systems übermittelt wird. Dieses Token enthält eine Empfänger-ID des mobilen Endgeräts. Wenn die zentrale Instanz für den Systemstandort, an dem das betreffende Endgerät respektive der dieses verwendende Ersthelfer eingecheckt ist, eine Hilfeanforderung empfängt, wird diese Hilfeanforderung unter Verwendung der Empfänger-ID über ein Providernetz, beispielsweise über ein Mobilfunknetz, an das Endgerät des betreffenden Ersthelfers weitergeleitet. Liegt die zuvor angesprochene Freigabe des Ersthelfers zur Aussendung eines entsprechenden Tokens nicht vor respektive liegt demnach ein entsprechendes Token bei der zentralen Instanz nicht vor, so wird eine eingehende Hilfeanforderung an eine bei der Registrierung als Ersthelfer angegebene E-Mail-Adresse des Ersthelfers gesendet, sofern dieser bei dem Systemstandort zum Zeitpunkt der Aussendung der sich auf diesen Standort beziehenden Hilfeanforderung eingecheckt ist. Insoweit handelt es sich bei der Möglichkeit der Nutzung der E-Mail-Adresse gewissermaßen um eine Fall-Back-Option.

Im Hinblick darauf, dass das Verfahren auch das Check-In von Ersthelfern mittels stationärer computerbasierter Endgeräte (PC) umfasst, bei deren Nutzung ein vielleicht kein mobiles Endgerät mit sich führender Ersthelfer eventuell ohnehin nur über E-Mail erreichbar ist, ist es vorzugsweise generell vorgesehen, dass die zentrale Instanz eine bei ihr für einen Systemstandort eingehende Hilfeanforderung an die Endgeräte der an diesem Standort eingecheckten Ersthelfer - gegebenenfalls kumulativ, also zusätzlich zur Weiterleitung an die Rufnummer eines mobilen Endgeräts - auch in Form einer E-Mail-Nachricht weiterleitet. Hierbei wird dann ebenfalls eine von einem jeweiligen Ersthelfer im Zusammenhang mit seiner Registrierung bei dem System angegebene E-Mail-Adresse verwendet.

Entsprechend einer Weiterbildung ist das Verfahren ferner so ausgestaltet, dass ein Ersthelfer, welcher eine Hilfeanforderung auf seinem Endgerät empfängt, durch die von diesem verarbeitete Programmanwendung dazu aufgefordert wird, den Empfang der Hilfsanforderung gegenüber der zentralen Instanz des Systems zu bestätigen. Hierdurch wird das System darüber informiert, dass davon auszugehen ist, dass sich ein Ersthelfer an den Ort des Notfalls begibt und dort Hilfe leistet. Dieser Ort kann in der Nachricht mit der Hilfsanforderung vorzugsweise mittels Koordinaten eines Positionsbestimmungssystems (beispielsweise GPS - siehe dazu auch weiter unten) genau bezeichnet sein. Unabhängig davon kann aber für die Ermittlung des genauen Notfallortes eine mit der Hilfeanforderung an den Ersthelfer übermittelte Rückrufnummer des die Hilfe anfordernden Nutzers hilfreich sein. Eine solche Rückrufnummer kann, wie bereits weiter oben ausgeführt, als Empfänger-ID in einem beim Absetzen eines Notrufs (beim Aussenden einer Hilfeanforderung) an die zentrale Instanz übermittelten Token enthalten sein.

Mit Blick auf die vorstehend angesprochene, von einem Ersthelfer auf entsprechende Aufforderung hin abgegebene Bestätigung über den Empfang einer Hilfeanforderung, kann es ferner vorgesehen sein, dass auch der die Hilfe anfordernde Nutzer über die entsprechende Empfangsbestätigung des Ersthelfers informiert wird. Er kann dann davon ausgehen, dass ihm in seiner Notsituation zeitnah geholfen wird.

Sofern der sich an den Ort der Notsituation begebende Ersthelfer im Rahmen des Verfahrens ein mobiles Endgerät nutzt, besteht für diesen darüber hinaus die Möglichkeit, mit Hilfe dieses mobilen Endgeräts Unterstützung durch weitere sich an demselben Systemstandort befindende respektive dort eingecheckte Ersthelfer anzufordern, wenn er dies aufgrund der Einschätzung der Lage vor Ort für erforderlich hält. Unabhängig hiervon kann jeder ein mobiles Endgerät nutzender Ersthelfer gemäß einer möglichen Verfahrensgestaltung außerdem durch Auswahl einer entsprechenden Programmoption der von diesem verarbeiteten Programmanwendung an die zentrale Instanz des Systems (ausnahmsweise und vorübergehend) wiederholt auf seinem Endgerät verfügbare Positionskoordinaten eines Positionsbestimmungssystems übermitteln lassen.

Wie bereits zuvor ausgeführt, wird durch die Notruf-App im Zusammenhang mit der Aussendung einer Hilfeanforderung vorzugsweise ein Token mit einer eine Rückrufnummer der die Hilfe anfordernden Person enthaltenden Empfänger-ID ausgesendet, welches auch an den die Hilfeanforderung empfangenden Ersthelfer übermittelt wird. Auch wenn zumindest der von dem Hilferuf betroffene Systemstandort regelmäßig unmittelbar bekannt ist, können insoweit durch einen Rückruf bei der Hilfe anfordernden Person noch genauere Angaben zum Ort des Notfalls erfragt werden, sofern die betroffene Person noch ansprechbar ist.

Damit einer Ersthilfe benötigenden Person unabhängig davon und gegebenenfalls noch schneller geholfen werden kann, kann das Verfahren zudem so umgesetzt werden, dass diese Person beim Absetzen einer Hilfeanforderung mittels der von ihrem Endgerät verarbeiteten Programmanwendung in analoger Weise eine Freigabe ihrer Positionskoordinaten/Geokoordinaten erteilen kann. Entsprechendes kann vorzugsweise durch eine vom Nutzer gewählte Voreinstellung in der Notruf-App geschehen. Denkbar ist es darüber hinaus, dass der Nutzer, sofern er eine solche Voreinstellung nicht vorgenommen hat und er in der für ihn entstandenen Notsituation noch dazu in der Lage ist, eine solche Freigabe über einen entsprechenden Button auf dem Display seines Endgeräts unmittelbar im Zusammenhang mit der Versendung der Hilfeanforderung erteilt und er dadurch die gegebenenfalls wiederholte Übermittlung seiner jeweils aktuellen Positionsdaten (genau genommen der seines Endgeräts) an die zentrale Instanz des Systems veranlasst. Aus Sicherheitsgründen ist allerdings sicherlich der ersten Variante, also der einer entsprechenden Voreinstellung der Vorzug zu geben.

Bei dem für die Lösung der Aufgabe, das heißt für die Durchführung des zuvor erläuterten Verfahrens ausgebildeten System handelt es sich um ein Kommunikationsnetzwerk mit einer Mehrzahl computerbasierter Endgeräte und mit einer zentralen Instanz. Hierbei ist das Endgerät eines Hilfe anfordernden Nutzers durch seine Ausstattung mit einer von dem Endgerät verarbeiteten Programmanwendung dazu ausgebildet, unter Übermittlung den jeweiligen augenblicklichen Systemstandort des Nutzers bezeichnender Angaben, eine durch den Nutzer ausgelöste Hilfeanforderung an die zentrale Instanz auszusenden.

Das Endgerät eines Ersthelfers ist, ebenfalls durch Ausstattung mit einer von dem Endgerät verarbeiteten Programmanwendung, dazu ausgebildet, sich bei dem System als Ersthelfer zu registrieren sowie einen sich auf einen Systemstandort beziehenden Check-In oder Check-Out zu ermöglichen. Ferner ist ein solches Endgerät für den Empfang durch die zentrale Instanz des Systems weitergeleiteter Hilfeanforderungen ausgebildet. Das Endgerät und die von ihm verarbeitete Programmanwendung sind zudem dazu ausgelegt, dem sie benutzenden Ersthelfer selbst die Anforderung von Ersthilfe, also das Absetzen einer entsprechenden, anderen Ersthelfern zuzuleitenden Hilfeanforderung an die zentrale Instanz, zu ermöglichen.

Letztere, das heißt die zentrale Instanz, bei welcher es sich ebenfalls um eine computertechnische Einrichtung handelt, ist programmtechnisch dazu ausgebildet, mindestens einen die Anforderung einer Ersthilfe ermöglichenden Systemstandort sowie mindestens eine als Ersthelfer fungierende Person zu registrieren und zu diesen Daten zu verwalten. Zur Verwaltung sich auf Ersthelfer beziehender Daten gehört dabei auch die Verwaltung von Daten dazu, welche Ersthelfer an welchem Systemstandort jeweils gerade eingecheckt sind. Die Registrierung erfolgt beispielsweise in einer zu der zentralen Instanz gehörenden oder sich in deren Zugriff befindenden Datenbank. Ferner ist die zentrale Instanz zur Steuerung der Weiterleitung einer, unter Übermittlung einen Systemstandort bezeichnender Angaben erfolgenden Hilfeanforderung an Endgeräte bei diesem Standort eingecheckter Ersthelfer ausgebildet und programmtechnisch eingerichtet.

Korrespondierend mit einer bereits angesprochenen bevorzugten Verfahrensgestaltung sind alle Endgeräte des Systems, also sowohl die Endgeräte im Bedarfsfall Hilfe anfordernder Nutzer des Systems als auch die Endgeräte bei diesem registrierter Ersthelfer, mit derselben Programmanwendung ausgestattet. Wie bereits im Zusammenhang mit dem Verfahren ausgeführt, ermöglicht diese Programmanwendung in einem ersten Betriebsmodus, das heißt in einem Standardbetriebsmodus, die Anforderung von Hilfe an einem Systemstandort mittels eines die Programmanwendung ausführenden Endgeräts. In einem zweiten, hier als Ersthelfermodus bezeichneten Betriebsmodus ermöglicht es die Programmanwendung Personen, sich als Ersthelfer bei dem System zu registrieren, sich nach erfolgter Registrierung bei einem Systemstandort ein- oder auszuchecken sowie gegebenenfalls Hilfeanforderungen betreffende Mitteilungen zu empfangen. Zudem ist der Ersthelfermodus so gestaltet, dass es auch Ersthelfern in diesem Modus selbst ermöglicht ist, Hilfe anzufordern, sofern sie diese benötigen.

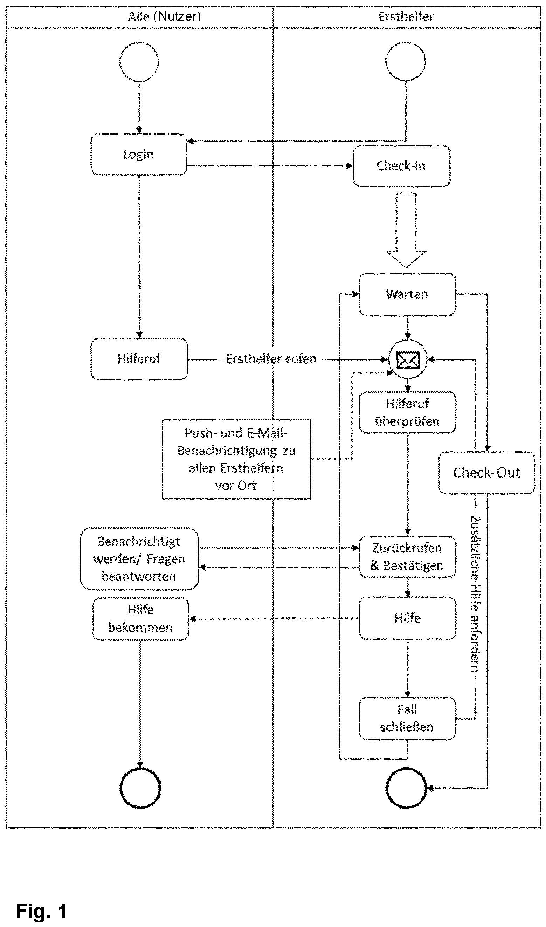

Das in der Fig. 1 dargestellte Schema veranschaulicht noch einmal symbolisch den grundsätzlichen Ansatz der zuvor dargestellten Lösung für das Management einer Ersthilfe in Notsituationen. Die Darstellung zeigt insbesondere die Verhältnisse aus der Sicht der Nutzer des Systems, nämlich von Personen, welche im Bedarfsfall Hilfe durch einen Ersthelfer anfordern sowie von Personen, welche bei dem System respektive bei dessen zentraler Instanz als Ersthelfer registriert sind. Die nachfolgenden beispielhaften Darstellungen gehen von der Nutzung eines mobilen Endgeräts durch einen in diesen beschreibenden Ausführungen angesprochenen Ersthelfer aus.

Aus der Sicht eines "normalen" Nutzers, das heißt einer selbst nicht als Ersthelfer registrierten Person, gestaltet sich der Verfahrensablauf bei der Nutzung des Verfahrens in einer Notsituation wie folgt. Der betreffende Nutzer hat auf einem von ihm mitgeführten Endgerät, also einem mobilen Endgerät, die auf diesem zur Nutzung des Verfahrens installierte Programmanwendung gestartet, wobei die betreffende Programmanwendung gegebenenfalls im Hintergrund läuft. Mit dem Start der Programmanwendung hat er sich vorzugsweise im Grunde automatisiert mittels auf seinem mobilen Endgerät bei seiner ersten Registrierung im System gespeicherter Daten in das System eingeloggt.

Gerät nun der Nutzer in eine Notsituation oder beobachtet er einen Fall, in welchem sich ein Dritter in einer Notsituation befindet, so kann er, sofern er sich an einem Systemstandort aufhält, beispielsweise mittels eines durch die Programmanwendung (Notruf-App) auf einem Display des Endgeräts visualisierten Buttons, Hilfe durch einen Ersthelfer anfordern. Aber auch, sofern die Programmanwendung auf seinem Endgerät noch nicht gestartet worden ist, kann ein solcher Nutzer im Notfall ohne weiteres Hilfe anfordern. Er muss dazu lediglich die Notruf-App starten. Durch die gestartete App wird der Nutzer automatisch beim System eingeloggt und kann schließlich beispielsweise einen schon erwähnten, ihm auf dem Display des Gerätes visualisierten Button betätigen, um Hilfe zu erhalten. Die daraufhin durch sein Endgerät ausgesendete Hilfeanforderung wird beispielsweise, insbesondere dann, wenn es sich bei seinem Endgerät um ein Mobilfunkgerät handelt, vorzugsweise über das Mobilfunknetz oder über das Internet oder über ein anderes mögliches übertragungsnetz an die zentrale Instanz des Systems übermittelt. Die zentrale Instanz ihrerseits leitet diese Hilfeanforderung an Endgeräte von Ersthelfern weiter, welche sich (vermeintlich) an demselben Systemstandort befinden und in Bezug auf diesen Systemstandort bei dem System eingecheckt sind.

Hierbei gehört es zum Systemmanagement, sicherzustellen, dass an einem jeweiligen Systemstandort auch mindestens ein dort verfügbarer Ersthelfer zugegen ist. Im Zusammenhang mit dem Einsatz der vorgestellten Lösung in der Arbeitswelt kann es in Abhängigkeit der an einem Systemstandort typischerweise ausgeführten Arbeiten im Extremfall auch vorgesehen sein, dass die Arbeit an einem solchen Systemstandort erst aufgenommen werden kann, wenn sich für diesen Systemstandort mindestens ein Ersthelfer beim System eingecheckt hat.

Ist also an dem betreffenden Systemstandort mindestens ein Ersthelfer eingecheckt, so wird jede eventuelle Hilfeanforderung eines Nutzers an das Endgerät dieses mindestens einen Ersthelfers weitergeleitet und der Ersthelfer wird sich nach deren Empfang zu der die Hilfe anfordernden Person begeben. Er kann hierbei vorzugsweise dadurch unterstützt werden, dass mit der Hilfeanforderung Geokoordinaten der die Hilfe anfordernden Person respektive des von ihr genutzten Endgeräts übermittelt werden. Sofern (ausnahmsweise) kein Ersthelfer an dem betroffenen Systemstandort eingecheckt ist, wird die hilfesuchende Person darüber informiert und kann dann einen anderen Weg für einen Hilferuf wählen, wie beispielsweise die allgemeine Notrufnummer 112.

Aus der Sicht eines Ersthelfers gestaltet sich demnach der Ablauf wie folgt. Auf einem durch den Ersthelfer genutzten Endgerät läuft die zur Nutzung des Verfahrens erforderliche Programmanwendung oder der Ersthelfer startet diese. In jedem Falle wird auch er im Zusammenhang mit dem Start der entsprechenden Programmanwendung auf seinem Endgerät mit Hilfe bei einem früheren Registrierungsvorgang hinterlegter Daten automatisiert bei dem System eingeloggt.

Betritt der Ersthelfer nunmehr einen Systemstandort, so checkt er sich mittels der von seinem Endgerät ausgeführten Programmanwendung bezogen auf diesen Standort bei dem System ein. Der Vorgang des Check-In ist dabei von dem des Login im Zusammenhang mit dem Start der Programmanwendung insoweit zu unterscheiden, als dem System erst bei einem an einem Systemstandort erfolgenden Check-In des Ersthelfers bekannt ist, dass sich dieser an dem betreffenden Systemstandort befindet und sein Endgerät für den Empfang von Ersthilfeanforderungen bereit ist. Vorzugsweise erfolgt hierbei das Check-In des Ersthelfers an einem jeweiligen Systemstandort automatisiert mittels Positionsbeziehungsweise Geokoordinaten, indem die auf seinem Endgerät gestartete Programmanwendung bei dem Endgerät verfügbar gemachte Geokoordinaten daraufhin vergleicht, ob diese den für einen Systemstandort und dessen Umfeld (zum Beispiel Radius von 500 m) registrierten Positionskoordinaten entsprechen.

Ist Letzteres der Fall, erfolgt der Check-In. Andererseits erfolgt ein automatisierter Check-Out, sofern der Ersthelfer mit seinem Endgerät den betreffenden Systemstandort wieder verlässt. Geht für einen Systemstandort, bei welchem der Ersthelfer eingecheckt ist, eine Hilfeanforderung ein, so wird diese Hilfeanforderung durch die zentrale Instanz des Systems an das Endgerät des betreffenden Ersthelfers weitergeleitet. Beim Empfang einer entsprechenden Hilfeanforderung ist der Ersthelfer dazu gehalten - er wird durch die auf seinem Endgerät ausgeführte Programmanwendung dazu aufgefordert -, den Eingang der Hilfeanforderung dem System zu notifizieren respektive den Empfang durch Betätigung eines auf einem Display visualisierten Buttons oder dergleichen zu bestätigen. Er wird sich dann zur Hilfeleistung zu dem in Not geratenen respektive die Hilfe anfordernden Nutzer des Systems begeben.

## Patentansprüche

1. Verfahren für das Management einer Ersthilfe in Notsituationen, welches es Nutzern eines dafür ausgebildeten Systems ermöglicht, mittels eines computerbasierten Endgerätes und einer von diesem Endgerät verarbeiteten Programmanwendung, an mindestens einem definierten, durch das System abgedeckten Standort Hilfe durch eine als Ersthelfer fungierende Person anzufordern, wobei mindestens ein solcher Systemstandort, nämlich ein die Anforderung einer Ersthilfe unter Nutzung des Systems und des Verfahrens ermöglichender Standort, sowie mindestens eine als Ersthelfer fungierende Person registriert werden bei einer zentralen Instanz des Systems, welche auch die Weiterleitung einer unter Übermittlung den jeweiligen Systemstandort bezeichnender Angaben erfolgenden Hilfeanforderung eines sich an einem Systemstandort befindenden Nutzers an ein Endgerät mindestens eines bei ihr registrierten Ersthelfers steuert, **dadurch gekennzeichnet, dass** die Weiterleitung von Hilfeanforderungen an als Ersthelfer bei dem System registrierte Personen entsprechend einem auf einen jeweiligen Systemstandort bezogenen Check-In/Check-Out-Mechanismus erfolgt, gemäß welchem eine an einem Systemstandort ausgesendete, bei der zentralen Instanz eingehende Hilfeanforderung nur an ein Endgerät mindestens eines bei diesem Standort eingecheckten Ersthelfers weitergeleitet wird, wobei ein sich ausschließlich auf einen Systemstandort beziehender Check-In oder Check-Out eines bei dem System registrierten Ersthelfers, welcher nicht an die Übermittlung diesen Ersthelfer betreffender Positionsangaben gebunden ist, mittels eines von dem Ersthelfer genutzten Endgeräts erfolgt, indem eine von diesem Endgerät verarbeitete Programmanwendung an die zentrale Instanz eine in dem System zu einer temporären Verknüpfung des Ersthelfers mit dem Systemstandort führende Check-In-Nachricht oder eine zur Aufhebung einer solchen bereits bestehenden Verknüpfung führende Check-Out-Nachricht übermittelt.

2. Verfahren nach Anspruch 1, **dadurch gekennzeichnet, dass** von Nutzern des Systems zur bedarfsweisen Anforderung von Hilfe eine Programmanwendung verwendet wird, mittels derer auch Ersthelfer bei einem jeweiligen Systemstandort ein- oder auschecken, nämlich eine Programmanwendung, welche in einem ersten Betriebsmodus, das heißt in einem Standardbetriebsmodus, die Anforderung von Hilfe an einem Systemstandort ermöglicht und welche in einem zweiten Betriebsmodus, das heißt in einem Ersthelfermodus, eine Registrierung als Ersthelfer bei dem System und den Check-In oder Check-Out bei einem Systemstandort sowie die Anforderung von Hilfe durch einen anderen bei dem System registrierten Ersthelfer ermöglicht.

3. Verfahren nach Anspruch 1 oder 2, **dadurch gekennzeichnet, dass** ein jeweiliges von einem Ersthelfer an einem Systemstandort verwendetes Endgerät und die von diesem verarbeitete Programmanwendung für diesen Systemstandort einen automatisierten Check-In oder sowohl einen automatisierten Check-In als auch einen automatisierten Check-Out durchführen.

4. Verfahren nach Anspruch 3, **dadurch gekennzeichnet, dass** bei der zentralen Instanz für die bei ihr registrierten Systemstandorte neben Adressen und/oder Bezeichnungen oder alternativ dazu Positionskoordinaten eines Positionsbestimmungssystems hinterlegt werden, welche für einen mittels eines mobilen Endgerätes eines Ersthelfers erfolgenden automatisierten Check-In und/oder Check-Out verwendet werden, indem an dieses mobile Endgerät und an die von diesem bei der Wahrnehmung einer Ersthelferfunktion seines Nutzers verarbeitete Programmanwendung, im Zuge der Registrierung des Ersthelfers bei dem System und im Falle nachfolgender die Systemstandorte betreffender Aktualisierungen des Systems, Positionskoordinaten zu den Systemstandorten übermittelt werden und indem die von dem mobilen Endgerät des Ersthelfers ausgeführte Programmanwendung das von dem Endgerät verwendete Betriebssystem über eine Programmschnittstelle beauftragt, den örtlichen Eintritt und das Verlassen einer Region um die zu einem der Systemstandort gehörenden Positionskoordinaten herum zu beobachten und beim Auftreten eines dieser Ereignisse eine Information zurückzugeben, aufgrund welcher die Programmanwendung automatisiert die standortbezogene Check-In- oder Check-Out-Nachricht an die zentrale Instanz des Systems übermittelt.

5. Verfahren nach Anspruch 1 bis 4, **dadurch gekennzeichnet, dass** bei einem mittels eines mobilen Endgerätes erfolgenden Check-In eines Ersthelfers an einem Systemstandort bis zu dessen Check-Out durch dieses mobile Endgerät wiederholt mithilfe eines Positionsbestimmungssystems ermittelte Positionskoordinaten an die zentrale Instanz des Systems übermittelt werden, sofern der Ersthelfer hierfür eine entsprechende Freigabe erteilt hat.

6. Verfahren nach Anspruch 4 oder 5, **dadurch gekennzeichnet, dass** durch das mobile Endgerät des Ersthelfers für den automatisierten Check-In und/oder für eine bis zu seinem Check-Out erfolgende wiederholte Übertragung seine Position bezeichnender Daten GPS-Koordinaten verwendet werden.

7. Verfahren nach einem Ansprüche 1 bis 6, **dadurch gekennzeichnet, dass** durch die von dem Endgerät des Ersthelfers verarbeitete Programmanwendung, im Falle einer dafür durch den Ersthelfer erteilten Freigabe, ein eine Empfänger-ID enthaltendes Token an die zentrale Instanz übermittelt wird und die zentrale Instanz eine bei ihr für diesen Systemstandort eingehende Hilfeanforderung unter Verwendung der Empfänger-ID über ein Providernetz an ein mobiles Endgerät des Ersthelfers weiterleitet.

8. Verfahren nach einem der Ansprüche 1 bis 7, **dadurch gekennzeichnet, dass** die zentrale Instanz eine bei ihr für einen Systemstandort eingehende Hilfeanforderung an die Endgeräte der an diesem Standort eingecheckten Ersthelfer in Form einer E-Mail-Nachricht weiterleitet und hierfür eine von einem jeweiligen Ersthelfer im Zusammenhang mit seiner Registrierung bei dem System angegebene E-Mail-Adresse verwendet.

9. Verfahren nach einem der Ansprüche 1 bis 8, **dadurch gekennzeichnet, dass** ein eine Hilfsanforderung auf seinem Endgerät empfangender Ersthelfer durch die von diesem verarbeitete Programmanmeldung dazu aufgefordert wird, deren Empfang gegenüber der zentralen Instanz des Systems zu bestätigen.

10. Verfahren nach einem der Ansprüche 1 bis 9, **dadurch gekennzeichnet, dass** ein die Programmanwendung zur Kommunikation mit der zentralen Instanz des Systems mit einem mobilen Endgerät verwendender Ersthelfer über die Programmanwendung Unterstützung durch weitere sich am selben Systemstandort befindende Ersthelfer anfordern kann.

11. Verfahren nach einem der Ansprüche 1 bis 10, **dadurch gekennzeichnet, dass** ein Hilfe anfordernder Nutzer über die zur Hilfeanforderung genutzte Programmanwendung die Übermittlung auf seinem Endgerät verfügbarer Positionskoordinaten eines Positionsbestimmungssystems an die zentrale Instanz freigeben kann.

12. Verfahren nach einem der Ansprüche 1 bis 11, **dadurch gekennzeichnet, dass** eng benachbarte Systemstandorte zu einer durch die zentrale Instanz auch bezüglich der Weiterleitung eingehender Hilfeanforderungen gemeinsam verwalteten Standortgruppe zusammengefasst werden.

13. System für das Management einer Ersthilfe in Notsituationen, ausgebildet als ein Kommunikationsnetzwerk mit einer Mehrzahl computerbasierter Endgeräte und mit einer zentralen Instanz, welches es Nutzern des Systems ermöglicht, an mindestens einem Systemstandort, nämlich an einem definierten, durch das System abgedeckten Standort, mittels jeweils eines von ihnen verwendeten computerbasierten Endgeräts Hilfe durch eine als Ersthelfer fungierende sowie ebenfalls mit einem computerbasierten Endgerät ausgestattete Person anzufordern, wobei
- das Endgerät eines Hilfe anfordernden Nutzers durch die Ausstattung mit einer von dem Endgerät verarbeiteten Programmanwendung dazu ausgebildet ist, unter Übermittlung den jeweils augenblicklichen Systemstandort des Nutzers bezeichnender Angaben, eine durch den Nutzer ausgelöste Hilfeanforderung an die zentrale Instanz zu übermitteln,
- das Endgerät eines Ersthelfers durch die Ausstattung mit einer von dem Endgerät verarbeiteten Programmanwendung dazu ausgebildet ist, sich bei dem System als Ersthelfer zu registrieren, einen sich auf einen Systemstandort beziehenden Check-In oder Check-Out des Ersthelfers zu ermöglichen sowie für den bei einem Systemstandort eingecheckten Ersthelfer eine durch die zentrale Instanz weitergeleitete, sich auf diesen Systemstandort beziehende Hilfeanforderung zu empfangen,
- die zentrale Instanz dazu ausgebildet und eingerichtet ist, mindestens einen die Anforderung einer Ersthilfe ermöglichenden Systemstandort und mindestens eine als Ersthelfer fungierende Person zu registrieren und zu diesen Daten zu verwalten sowie sich an einem Systemstandort eincheckende Ersthelfer zu verwalten und die Weiterleitung einer unter Übermittlung einen Systemstandort bezeichnender Angaben erfolgenden Hilfeanforderung an Endgeräte bei diesem Standort eingecheckter Ersthelfer zu steuern.

14. System nach Anspruch 13, **dadurch gekennzeichnet, dass** alle Endgeräte des Systems mit derselben Programmanwendung ausgestattet sind, welche in einem ersten Betriebsmodus, das heißt in einem Standardbetriebsmodus, mittels eines diese Programmanwendung verarbeitenden Endgeräts die Anforderung von Hilfe an einem Systemstandort ermöglicht und welche in einem zweiten Betriebsmodus, das heißt in einem Ersthelfermodus, mittels eines diese Programmanwendung verarbeitenden Endgeräts eine Registrierung als Ersthelfer bei dem System und den Check-In oder Check-Out bei einem Systemstandort sowie die Anforderung von Hilfe durch einen anderen bei dem System registrierten Ersthelfer ermöglicht.
